Europäisches Patentamt

European Patent Office

Office européen des brevets

(11) Veröffentlichungsnummer: **0 280 006**
**A1**

## EUROPÄISCHE PATENTANMELDUNG

(21) Anmeldenummer: 88100236.4

(22) Anmeldetag: **11.01.88**

(51) Int. Cl.⁴: **A47J 36/04 , A47J 36/34**

(30) Priorität: 20.02.87 DE 8702619 U
19.05.87 DE 8707187 U

(43) Veröffentlichungstag der Anmeldung:
**31.08.88** Patentblatt **88/35**

(84) Benannte Vertragsstaaten:
**DE ES FR GB IT NL**

(71) Anmelder: **EMSA-Werke Wulf GmbH & Co.**
**Grevener Damm 215-225**
**D-4407 Emsdetten(DE)**

(72) Erfinder: **Pegelow,Erich**
**Jägerstrasse 141**
**D-4440 Rheine 1(DE)**

(74) Vertreter: **Patentanwälte Schulze Horn und**
**Hoffmeister**
**Goldstrasse 36**
**D-4400 Münster(DE)**

(54) Geschirrstück für das Zubereiten und Servieren von insbesondere warmen Speisen.

(57) Die Erfindung betrifft ein Geschirrstück für das Zubereiten und Servieren von warmen Speisen, die in einem Mikrowellenherd zubereitet werden. Das Geschirrstück ist gekennzeichnet durch einen Tragkorb (3), der eine Schale (2) aus vorzugsweise wärmefestem Glas umgibt und der Durchbrechungen aufweist und aus wärmefestem Kunststoff hergestellt ist. Der Tragkorb (3) weist in einer Ausführungsform einen kreuz-oder sternförmigen Boden (31) auf, von dessen äußeren Rand eine Anzahl von Außenstreben ausgeht, die an ihren oberen Enden durch einen um die Schale (2) umlaufenden Ring (33) miteinander verbunden sind.

EP 0 280 006 A1

## Geschirrstück für das Zubereiten und Servieren von insbesondere warmen Speisen

Die Erfindung betrifft ein Geschirrstück für das Zubereiten und Servieren von insbesondere warmen Speisen, bestehend aus einer Schale aus einem hitzbeständigen Werkstoff, vorzugsweise wärmefestem Glas, und einem die Schale wahlweise abdeckenden Deckel aus einem ebenfalls hitzebeständigen Werkstoff.

Es sind Geschirrstücke aus hitzebeständigem Werkstoff, z.B. Glas oder Keramik, bekannt, in welchen eine Speise sowohl zubereitet, das heißt insbesondere gegart, als auch serviert werden kann. Nachteilig ist hierbei, daß das Geschirrstück nach der Zubereitung der Speise, z.B. im Mikrowellenherd oder in einem herkömmlichen Backofen, eine sehr hohe Temperatur aufweist. Bei Berührung des Geschirrstückes mit bloßen Händen kommt es so zu Verbrennungen, weshalb für die Handdhabung solcher Geschirrstücke immer Isolationsmittel, wie Topflappen, Untersetzer und dergleichen, benötigt werden. Dies macht die Handhabung umständlich und aufwendig.

Es stellt sich daher die Aufgabe, ein Geschirrstück der eingangs genannten Art zu schaffen, das die aufgeführten Nachteile vermeidet, und dessen Handhabung auch ohne die oben angegebenen Isolationsmittel möglich ist, ohne daß eine Verbrennungsgefahr für die Hände oder eine Beschädigungsgefahr für Möbel besteht.

Die Lösung dieser Aufgabe gelingt erfindungsgemäß durch ein Geschirrstück der eingangs genannten Art, welches gekennzeichnet ist durch einen die Schale außen-und unterseitig im wesentlichen formschlüssig umgebenden, Durch brechungen aufweisenden Tragkorb aus einem wärmefesten Duroplasten, gegebenenfalls auch hitzebeständigen Thermoplasten. Dabei kann der Werkstoff der Schale und/oder des Deckels z.B. Glas, hitzebeständiger Kunststoff oder Keramik sein, nicht jedoch Metall.

Bei diesem Geschirrstück dient der Tragkorb als Isolator für den Hitzeschutz der Hände einer das Geschirrstück tragenden Person und der Oberfläche von Möbeln, auf denen das Geschirrstück abgestellt wird. Erreicht wird dies im wesentlichen durch die Verwendung eines Duroplasten als Werkstoff für den Tragkorb. Duroplaste und hochtemperaturfeste Thermoplaste sind engmaschig bis zur Zersetzungstemperatur vernetzte hochpolymere Kunststoffe, die bei niederen Temperaturen stahlelastisch sind und auch bei hohen Temperaturen nicht viskos fließen, sondern sich unterhalb der Zersetzungstemperatur bei sehr begrenzter Deformierbarkeit elastisch erhalten. Damit ist das Geschirrstück gemäß Erfindung ohne die Gefahr einer Beschädigung für Temperaturen für bis etwa 250° C geeignet. Wegen der im Gegensatz zu z.B. Metallen geringen Wärmeleitfähigkeit und -kapazität des Werkstoffes des Tragkorbes kann dieser ohne Gefahr berührt und auf Möbeloberflächen abgestellt werden, auch wenn das Geschirrstück kurz zuvor noch in einem Ofen erhitzt wurde. Zudem ist das Material einfach zu reinigen, hat ein geringes Gewicht und erfordert bei der Herstellung des Geschirrstückes nur relativ geringe Kosten. Wegen der Mikrowellen-Durchlässigkeit des Werkstoffes für den Tragkorb ist eine uneingeschränkte Verwendung des Geschirrstückes auch im Mikrowellenherd möglich. Durch eine entsprechende Randgestaltung kann auf den Behälter auch ein Deckel aufgesetzt werden, der diesen luftdicht abschließt und damit zu einer sogenannten Frischhalteschale macht.

Bevorzugte Ausgestaltungen des Geschirrstückes gehen aus den Unteransprüchen 2 bis 6 hervor.

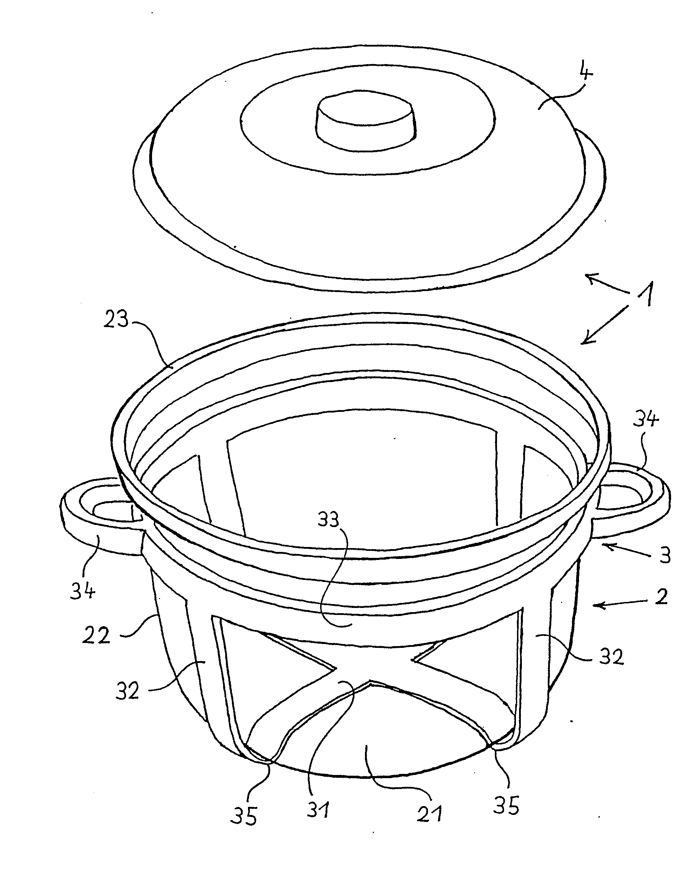

Ein bevorzugtes Ausführungsbeispiel der Erfindung wird im folgenden anhand einer Zeichnung näher erläutert. Die einzige Figur der Zeichnung zeigt ein Geschirrstück gemäß Erfindung in perspektivischer Ansicht mit abgehobenem Deckel.

Wie aus der Figur ersichtlich, besteht das dargestellte Ausführungsbeispiel des Geschirrstückes 1 gemäß Erfindung im wesentlichen aus einer Schale 2 aus einem durchsichtigen, hitzebeständigen Werkstoff, aus einem diese Schale 2 umgebenden Tragkorb 3 und einem Deckel 4 zum wahlweisen Abdecken der Schale 2. Der Tragkorb 3 besitzt einen kreuzförmigen Boden 31, der unterhalb des Bodens 21 der Schale 2 angeordnet ist. Vom äußeren Ende der vier Arme des Bodens 31 ausgehend verläuft jeweils eine Außenstrebe 32 entlang der Schalenwandung 22 nach oben. Die oberen Enden der Außenstreben 32 des Tragkorbes 3 sind durch einen um die Schale 2 umlaufenden Ring 33 miteinander verbunden. An zwei einander diametral gegenüber liegenden Bereichen des Ringes 33 ist jeweils ein Handgriff 34 in Form einer offenen, nach außen vorragenden Öse angeordnet.

Der Ring 33 des Tragkorbes 3 läuft beim dargestellten Ausführungsbeispiel unterhalb eines nach außen vorspringenden Randes 23 der Schale 2 um diese herum, so daß ein sicherer Halt der Schale 2 auch in gefülltem Zustand in dem Tragkorb 3 gewährleistet ist. Es kann sich bei anderen Ausführungsformen jedoch auch um eine zylindrische Schale ohne Rand handeln.

Der Tragkorb 3 ist vorzugsweise einstückig als Spritzgußteil hergestellt, was zu günstigen Herstellungskosten für das Geschirrstück beiträgt. Auch der Deckel 4 für die Schale 2 kann aus einem duroplastischen Kunststoff hergestellt sein, was ebenfalls zu günstigen Herstellungskosten sowie zu einem geringen Gesamtgewicht des Geschirrstückes beiträgt.

Wie aus der Zeichnung ersichtlich ist, findet bei der Hand habung des Geschirrstückes 1 eine Berührung der Schale 2 nicht statt. Auch Oberflächen von Möbeln, auf denen das Geschirrstück 1 abgestellt wird, können nicht beschädigt werden, da zwischen dem Boden 21 der Schale 2 und der Möbeloberfläche der Boden 31 des Korbes 3 liegt. Zur Vergrößerung des Abstandes des Bodens 21 von einer Möbeloberfläche kann der Boden 312, wie im dargestellten Ausführungsbeispiel gezeigt, an seinem äußeren Rand nach unten hin vorspringende Ausformungen 35 aufweisen, die bei der Herstellung des Tragkorbes 3 leicht anzubringen sind. Zugleich sorgen diese Ausformungen 35 für einen sicheren, kippfreien Stand des Geschirrstückes 1.

Wegen der großen freien Flächen und Durchbrechungen zwischen den einzelnen Teilen des Tragkorbes 3 kann eine in der Schale 2 befindliche Speise während der Zubereitung ungehindert beobachtet werden. Da sowohl der Tragkorb 3 als auch der Deckel 4 wegen der Verwendung von Duroplasten als Werkstoff mikrowellen-durchlässig sind, ist eine uneingeschränkte Verwendung des Geschirrstückes 1 auch im Mikrowellenherd gewährleistet. Auch in herkömmlichen Backöfen kann das Geschirrstück 1 wegen der hohen Wärmebeständigkeit des duroplastischen Kunststoffes ohne Beschädigungsgefahr bis zu Temperaturen von etwa 250° C verwendet werden.

## Ansprüche

1. Geschirrstück für das Zubereiten und Servieren von insbesondere warmen Speisen, bestehend aus einer Schale aus einem hitzebeständigen Werkstoff, vorzugsweise wärmefestem Glas, und einem die Schale wahlweise abdeckenden Deckel aus einem ebenfalls hitzebeständigen Werkstoff, gekennzeichnet durch einen die Schale (2) außen- und unterseitig im wesentlichen formschlüssig umgebenden, Durchbrechungen aufweisenden Tragkorb (3) aus einem wärmefesten Kunststoff.

2. Geschirrstück nach Anspruch 1, dadurch gekennzeichnet, daß der Tragkorb und/oder Deckel (4) aus einem wärmefesten Duroplasten besteht.

3. Geschirrstück nach den Ansprüchen 1 und 2, dadurch gekennzeichnet, daß der Tragkorb (3) einen kreuz-oder sternförmigen Boden (31) aufweist, daß vom äußeren Rand des Bodens (31) ausgehend eine Anzahl von Außenstreben (32) nach oben verläuft und daß die oberen Enden der Außenstreben (32) durch einen um die Schale (2) umlaufenden Ring (33) miteinander verbunden sind.

4. Geschirrstück nach den Ansprüchen 1 bis 3, gekennzeichnet durch wenigstens zwei von dem umlaufenden Ring (33) nach außen vorstehende Handgriffe (34).

5. Geschirrstück nach den Ansprüchen 1 bis 4, dadurch gekennzeichnet, daß der Tragkorb (3) mit dem Boden (31), Außenstreben (32), umlaufendem Ring (33) und Handgriffen (34) als einstückigem Spritzgußteil ausgebildet ist.

6. Geschirrstück nach den Ansprüchen 1 bis 5, gekennzeichnet durch im Randbereich des Bodens (31) des Tragkorbes (3) im diesem vorhandene, nach unten hin vorstehende Ausformungen (35).

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 663 172 (YELLIN) * Insgesamt * --- | 1,2,4-6 | A 47 J 36/04 A 47 J 36/34 |
| A | US-A-1 980 131 (FLANAGAN) * Insgesamt * --- | 1,3,4 | |
| A | GB-A- 590 959 (PEEL) * Insgesamt * --- | 1,3,4 | |
| A | FR-A- 321 059 (WISKEMANN) * Figuren 1-3 * --- | 1,4 | |
| A | FR-A-1 504 466 (MOUSSET) * Figuren 1-6 * --- | 1,3,4 | |
| A | GB-A- 664 856 (WIGGIN) * Figuren 1-5 * --- | 1,4 | |
| A | DE-A-2 657 741 (BOSCH-SIEMENS) * Insgesamt * --- | 1,2 | |
| A | WO-A-8 001 483 (HAVERLAND) * Insgesamt * ----- | 1,2 | **RECHERCHIERTE SACHGEBIETE (Int. Cl.4)** A 47 J A 47 G H 05 B |

Der vorliegende Recherchenbericht wurde für alle Patentansprüche erstellt

| Recherchenort | Abschlußdatum der Recherche | Prüfer |
|---|---|---|
| DEN HAAG | 26-05-1988 | SCHARTZ J. |